# EUROPÄISCHE PATENTANMELDUNG

(11) **EP 4 682 021 A2**
(43) Veröffentlichungstag der Anmeldung: **21.01.2026**
(21) Anmeldenummer: 25196961.4
(22) Anmeldetag: 13.12.2023
(51) Int. Cl.: B62B 5/00

(54) **PLATTFORMWAGEN FÜR DEN TRANSPORT VON STÜCKGUT**

(30) Priorität: 19.09.2023 DE 202023105453 U
(62) Teilanmeldung aus: 23216096.0
(71) Anmelder: LKE Gesellschaft für Logistik- und Kommunikations- Equipment mbH, 45768 Marl (DE)
(72) Erfinder: KNOL, DIETRICH, 44793 Bochum (DE); BLICHMANN, CARSTEN, 15926 Luckau (DE); MATZEK, JÖRN, 45145 Essen (DE); LEHMANN, SILVIO, 01561 Ebersbach OT Naundorf (DE)
(74) Vertreter: Brinkmann & Partner

(57) **Zusammenfassung**

Die Erfindung betrifft einen Plattformwagen für den Transport von Stückgut, insbesondere als Anhänger für einen Zugbetrieb ausgebildeter Plattformwagen, mit einem Chassis (2), einer am Chassis (2) angeordneten Plattform (3) und einer Mehrzahl von am Chassis (2) angeordneten Lenkrollen (5), die das Chassis (2) tragen, sowie mit einer am Chassis (2) angeordneten Bockrolle (6), die in Höhenrichtung des Chassis (2) verfahrbar und aus einer Gebrauchsstellung in eine Nichtgebrauchsstellung und umgekehrt überführbar ausgebildet ist, gekennzeichnet durch eine Pendelachse (9), die einen um eine quer zur Längserstreckung (10) des Chassis (2) verlaufende Schwenkachse (11) verdrehbar ausgebildeten Grundkörper (14) aufweist, wobei am Grundkörper (14) die Bockrolle (6) und eine Lenkrolle (5) angeordnet sind und wobei die Lenkrolle (5) und die Bockrolle (6) unter Zwischenordnung der Schwenkachse (11) einander gegenüberliegen.

## Beschreibung

Die Erfindung betrifft einen Plattformwagen für den Transport von Stückgut, insbesondere als Anhänger für einen Zugbetrieb ausgebildeter Plattformwagen, mit einem Chassis, einer am Chassis angeordneten Plattform und einer Mehrzahl von am Chassis angeordneten Lenkrollen, die das Chassis tragen, sowie mit einer am Chassis angeordneten Bockrolle, die in Höhenrichtung des Chassis verfahrbar und aus einer Gebrauchsstellung in eine Nichtgebrauchsstellung und umgekehrt überführbar ausgebildet ist.

Plattformwagen im Allgemeinen sowie solche, die als Anhänger für einen Zugbetrieb ausgebildet sind, im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die DE 10 2010 006 388 A1 verwiesen, die einen Plattformwagen mit von zwei Seiten hochverschwenkbarer Plattform betrifft.

Weiterer Stand der Technik ist durch die EP 1 640 255 A1, die EP 2 826 693 A2, die WO 2011/017735 A1, die JP 2005-313720 A und die DE 20 2010 002 576 U1 gegeben. Dabei betrifft die WO 2011/017735 A1 einen Einkaufswagen, der in an sich bekannter Weise über eine aus einem metallischen Geflecht gebildete Korbaufnahme verfügt, die von einem Chassis getragen ist. Das Chassis ist zweiteilig ausgebildet und verfügt über einen in Bewegungsrichtung des Einkaufswagens vorderen Abschnitt einerseits und einen hinteren Abschnitt andererseits. Dabei sind die beiden Abschnitte verdrehbar miteinander gekoppelt.

Ein gattungsgemäßer Plattformwagen verfügt über ein Chassis und eine davon getragene Plattform. Im bestimmungsgemäßen Verwendungsfall dient die Plattform der Aufnahme von mittels des Plattformwagens zu transportierendem Stückgut.

Der Plattformwagen verfügt ferner über eine Mehrzahl von am Chassis angeordneten Lenkrollen. Die Lenkrollen tragen das Chassis und ermöglichen eine Verfahrbewegung des Plattformwagens. "Lenkrolle" im Sinne der Erfindung meint dabei Laufrollen, die um eine in Höhenrichtung des Plattformwagens verlaufende Schwenkachse verdrehbar ausgebildet sind. Die Lenkrollen ermöglichen mithin eine Kurvenfahrt, so auch eine Verfahrbewegung des Plattformwagens in eine quer zur Längserstreckung des Plattformwagens verlaufende Fahrrichtung.

Der Plattformwagen verfügt neben den Lenkrollen des Weiteren über eine Bockrolle, die ebenso wie die Lenkrollen am Chassis angeordnet ist. "Bockrolle" im Sinne der Erfindung meint dabei eine Laufrolle, die im Unterschied zu einer Lenkrolle nicht um eine in Höhenrichtung des Plattformwagens verlaufende Schwenkachse verdrehbar ausgebildet ist.

Die Bockrolle ist in Höhenrichtung des Chassis verfahrbar ausgebildet und kann aus einer Gebrauchsstellung in eine Nichtgebrauchsstellung und umgekehrt überführt werden. Dabei stützt sich die Bockrolle in Gebrauchsstellung am Fahruntergrund ab, steht also ebenso wie die Lenkrollen in einem Berührungskontakt mit dem Untergrund. In Nichtgebrauchsstellung ist die Bockrolle indes in Höhenrichtung des Plattformwagens nach oben verfahren, so dass sie sich in dieser Stellung nicht in einem Berührungskontakt mit dem Untergrund befindet.

Die Bockrolle dient im bestimmungsgemäßen Verwendungsfall dazu, einen Geradeauslauf des Plattformwagens sicherzustellen. Eine solche Sicherstellung des Geradeauslaufs des Plattformwagens ist insbesondere dann erwünscht, wenn sich der Plattformwagen im Zugbetrieb befindet, beispielsweise als Teil eines Routenzugs. Ein solcher Routenzug verfügt typischerweise über ein Zugfahrzeug und mehrere daran in Reihe angehängte und als Plattformwagen ausgebildete Anhänger. In einer solchen Routenzugausgestaltung befinden sich die Bockrollen der Plattformwagen jeweils in ihrer Gebrauchsstellung, haben also Bodenkontakt, so dass mangels Verdrehbarkeit der Bockrollen um eine in Höhenrichtung verlaufende Schwenkachse ein Geradeauslauf sichergestellt ist, mithin ein Ausbrechen einzelner Plattformwagen aus einem bewegten Routenzug vermieden ist.

Befindet sich ein Plattformwagen nicht im Zugbetrieb, beispielsweise weil ein Routenzug nach Erreichen seiner bestimmungsgemäßen Endposition aufgelöst wird, so ist die Bockrolle in ihre Nichtgebrauchsstellung zu überführen, um eine Querbewegung des Plattformwagens in Relation zur Routenzugausrichtung zu ermöglichen. Hierzu dienen die Lenkrollen, die eine Kurvenfahrt ermöglichen, so auch eine Manövrierbewegung, die in einer quer, beispielsweise orthogonal, zur Fahrtrichtung des Routenzugs bzw. zur Längserstreckung des Plattformwagens verlaufenden Fahrrichtung verläuft. Eine solche Querbewegung verhindern die nicht lenkbaren Bockrollen, wenn sie sich in Gebrauchsstellung befinden, das heißt Bodenkontakt haben. Aus diesem Grunde sind die Bockrollen in Höhenrichtung verfahrbar und können ausgehend von ihrer Gebrauchsstellung in eine Nichtgebrauchsstellung überführt werden, wobei sie in Nichtgebrauchsstellung keinen Bodenkontakt haben. Insofern ist in Nichtgebrauchsstellung der Bockrollen eine jeweilige Querbewegung der Plattformwagen ermöglicht.

Obgleich sich Plattformwagen der vorbeschriebenen Art im alltäglichen Praxiseinsatz bewährt haben, besteht Verbesserungsbedarf. Insbesondere ist es angestrebt, einen noch weiter verbesserten Geradeauslauf zu ermöglichen. Es ist deshalb die **Aufgabe** der Erfindung, einen Plattformwagen der gattungsgemäßen Art konstruktiv dahingehend weiterzuentwickeln, dass noch weiter verbesserte Fahreigenschaften, insbesondere ein noch weiter verbesserter Geradeauslauf, sichergestellt sind.

Zur **Lösung** dieser Aufgabe wird mit der Erfindung ein gattungsgemäßer Plattformwagen vorgeschlagen, der sich auszeichnet durch eine Pendelachse, die einen um eine quer zur Längserstreckung des Chassis verlaufende Schwenkachse verdrehbar ausgebildeten Grundkörper aufweist, wobei am Grundkörper die Bockrolle und eine Lenkrolle angeordnet sind und wobei die Lenkrolle und die Bockrolle unter Zwischenordnung der Schwenkachse einander gegenüberliegen.

Der erfindungsgemäße Plattformwagen verfügt über eine Pendelachse. Diese Pendelachse weist einen Grundkörper auf. An diesem sind die Bockrolle und eine Lenkrolle, vorzugsweise zwei Lenkrollen, angeordnet. Die Bockrolle und die Lenkrolle sind mithin nicht direkt, sondern unter Zwischenordnung der Pendelachse am Chassis angeordnet.

Der Grundkörper, an dem die Bockrolle und die Lenkrolle angeordnet sind, ist in Relation zum Chassis verdrehbar ausgebildet, und zwar um eine Schwenkachse, die quer zur Längserstreckung des Chassis verläuft.

Erfindungsgemäß ist ferner vorgesehen, dass die Lenkrolle und die Bockrolle unter Zwischenordnung der Schwenkachse einander gegenüberliegen. Die Lenkrolle und die Bockrolle sind mithin in Längserstreckung des Chassis beabstandet voneinander angeordnet, wobei die Schwenkachse, um die herum der Grundkörper verschwenkbar ausgebildet ist, in Abstandsrichtung zwischen Lenkrolle und Bockrolle verläuft.

Die erfindungsgemäße Ausgestaltung erbringt in synergetischer Weise eine Mehrzahl von Vorteilen.

Bei aus dem Stand der Technik vorbekannten Plattformwagen ist von Nachteil, dass bei einer Rampenfahrt die Bockrolle ihren Bodenkontakt verliert. Dabei geht der Bodenkontakt der Bockrolle immer dann verloren, wenn sich die in Fahrrichtung vorderen Lenkrollen bereits auf der Rampe befinden, die in Fahrrichtung hinteren Lenkrollen aber noch nicht.

Durch ein solch ungewolltes Abheben der Bockrolle vom Untergrund infolge einer Rampenfahrt wird der sichere Geradeauslauf des Plattformwagens gestört. Dabei fällt diese Störung um so gravierender aus, je länger der Plattformwagen in Längserstreckung ausgebildet ist, das heißt je größer der Abstand zwischen den in Fahrtrichtung vorderen Lenkrollen einerseits und den hinteren Lenkrollen andererseits ausfällt.

Die erfindungsgemäße Ausgestaltung schafft hier Abhilfe. Denn die Pendelachse sorgt mit ihrem verschwenkbar am Chassis angeordneten Grundkörper dafür, dass im Betriebsfall eine relative Verdrehbewegung zwischen Grundkörper und Chassis stattfinden kann. In der Konsequenz ist so sichergestellt, dass die vom Grundkörper getragenen Rollen stets Bodenkontakt haben, und zwar auch bei einer Rampenfahrt. Denn im Falle einer Rampenfahrt kann sich die Pendelachse mit ihrem Grundkörper in Relation zum Chassis verdrehen, und zwar so, dass die am Grundkörper angeordneten Rollen in Richtung der Rampenoberfläche ausgerichtet werden. Ein Geradeauslauf ist so in jedem Fall sichergestellt, im Unterschied zum Stand der Technik auch bei einer Rampenfahrt. Dies führt zu insgesamt verbesserten Fahreigenschaften. Insbesondere ist vermieden, dass ein Plattformwagen im Zugbetrieb bei einer Rampenfahrt ausbricht und Schlingerbewegungen bis hin zu einem Entgleisen verursacht.

Die erfindungsgemäß vorgesehene Pendelachse erbringt darüber hinaus in synergetischer Weise den Vorteil, dass bei einer verwenderseitigen Betätigung ein Hochstellen der von der Pendelachse bereitgestellten Bockrolle ermöglicht ist. Durch ein Verschwenken der Pendelachse kann mithin unterschieden werden zwischen der Gebrauchsstellung und einer Nichtgebrauchsstellung der von der Pendelachse bereitgestellten Bockrolle. Auf einen zusätzlichen Verstellmechanismus für eine Überführung der Bockrolle aus einer Gebrauchsstellung in eine Nichtgebrauchsstellung kann daher verzichtet werden.

Die erfindungsgemäß vorgesehene Pendelachse erfüllt mithin im Wesentlichen zwei Funktionen. Zum einen kann durch automatisches Verschwenken im Falle einer Rampenfahrt ein dauerhafter Bodenkontakt sämtlicher von der Pendelachse bereitgestellten Rollen sichergestellt werden. Zum anderen ist im Nichtfahrbetrieb des Plattformwagens ein manuelles Verschwenken der Pendelachse mit der Folge ermöglicht, dass nur die Lenkrollen der Pendelachse, nicht aber die Bockrolle der Pendelachse Bodenkontakt haben, so dass dann im Weiteren eine Querbewegung des Plattformwagens in einfacher Weise eingeleitet werden kann.

Die erfindungsgemäße Ausgestaltung bringt noch einen weiteren Vorteil mit sich. Der Anpressdruck auf die Bockrolle wird durch das Gewicht des Plattformwagens selbst und dem Gewicht der davon transportierten Last erzeugt. Nach dem Stand der Technik kommen Druckfedern zum Einsatz, die die Bockrolle in ihrer heruntergefahrenen Stellung belasten. Der Federdruck ist aber immer gleich groß, unabhängig von dem Gewicht des Plattformwagens und dem Gewicht einer davon transportierten Last. Die erfindungsgemäß vorgesehene Pendelachse hat insofern den Vorteil, dass der Anpressdruck mit der Höhe des Gewichts von Plattformwagen und Last anwächst, womit sichergestellt ist, dass bei entsprechend hohen Lasten auch eine entsprechend höhere Anpresskraft gegeben ist, und nicht wie beim Stand der Technik eine stets gleich große Anpresskraft gegeben ist. Auch hierdurch ergeben sich im Ergebnis verbesserte Fahreigenschaften, insbesondere im Zugbetrieb.

Im Ergebnis der erfindungsgemäßen Ausgestaltung steht insgesamt ein Plattformwagen, der bei gleichzeitiger Sicherstellung eines Geradeauslaufs im Routenzugverbund eine einfache Überführung einer Bockrolle aus der Gebrauchsstellung in die Nichtgebrauchsstellung für eine Querfahrt ermöglicht.

Gemäß einem weiteren Merkmal der Erfindung ist vorgesehen, dass am Grundkörper zwei Lenkrollen angeordnet sind, die auf einer parallel zur Schwenkachse verlaufenden Achse beabstandet zueinander angeordnet sind.

Die Pendelachse verfügt vorzugsweise über zwei Lenkrollen. Diese sind am Grundkörper angeordnet und fluchten miteinander in Bezug auf eine parallel zur Schwenkachse des Grundkörpers verlaufenden Achse. Diese beiden Lenkrollen bilden in Bezug auf eine Vorwärtsfahrt des Plattformwagens die beiden vorderen Lenkrollen.

Die Lenkrollen sind beabstandet zueinander angeordnet, und zwar in Richtung der Schwenkachse. Vorzugsweise sind die Lenkrollen endmontiert, befinden sich also mit Bezug auf eine Geradeausfahrt des Plattformwagens im Bereich der vorderen linken Ecke einerseits und der vorderen rechten Ecke andererseits.

Gemäß einem weiteren Merkmal der Erfindung ist vorgesehen, dass am Grundkörper zwei Bockrollen angeordnet sind, vorzugsweise in der Ausgestaltung einer Doppelbockrolle.

Das Vorsehen von zwei Bockrollen erhöht insbesondere die Tragfähigkeit des Plattformwagens. Gemäß einer besonders bevorzugten Ausführungsform verfügt der Plattformwagen über insgesamt sechs Laufräder, und zwar vier Lenkrollen einerseits und zwei Bockrollen andererseits.

Besonders bevorzugt ist es, die beiden Bockrollen in relativer Nähe zueinander auszubilden, insbesondere als Doppelbockrolle. Diese Ausgestaltung erbringt den Vorteil, dass unterhalb des Chassis für andere Bauteile und/oder Funktionselemente ergänzender Bauraum zur Verfügung steht.

Gemäß einem weiteren Merkmal der Erfindung ist vorgesehen, dass die Bockrollen mit Bezug auf die quer zur Längserstreckung des Chassis verlaufende Schwenkachse mittig zwischen den beiden voneinander beabstandeten Lenkrollen angeordnet sind.

Es ist so ein insgesamt symmetrischer Aufbau gegeben, der die mit der Erfindung erzielten positiven Fahreigenschaften zusätzlich unterstützt. Insbesondere ist durch diese Ausrichtung von Lenk- und Bockrollen eine Gewichtsverteilung erreicht, die eine bestimmungsgemäße Verschwenkbewegung des Grundkörpers der Pendelachse unterstützt und ungewollte Querbelastungen vermeiden hilft. Es ist so eine im Betrieb besonders verschleißarme Konstruktion geschaffen.

Gemäß einem weiteren Merkmal der Erfindung ist vorgesehen, dass am Chassis Staplerführungen angeordnet sind. Diese dienen im bestimmungsgemäßen Verwendungsfall der Aufnahme von Staplergabeln, so dass ein Plattformwagen in einfacher Weise auch mittels eines Staplers positionsversetzt werden kann. Dabei befinden sich die Staplerführungen vorzugsweise der vom Plattformwagen bereitgestellten Plattform gegenüberliegend auf der bodenzugewandten Seite des Chassis. Gemäß einer alternativen Ausführungsform können die Staplerhilfen auch zwischen Plattform und Chassis angeordnet sein. Diese alternative Ausführung ist insbesondere dann sinnvoll, wenn der Plattformwagen in Längserstreckung vergleichsweise kurz ausgebildet ist, unterhalb des Chassis also nicht genügend Bauraum zur Verfügung steht, bestimmungsgemäß ausgebildete und beabstandete Staplerführungen vorzusehen.

Gemäß einem weiteren Merkmal der Erfindung ist vorgesehen, dass der Grundkörper einen Querträger und zwei daran jeweils endseitig angeordnete Radträger aufweist.

Der Grundkörper verfügt über zwei Radträger. Dabei dient ein jeder Radträger der Anordnung einer Lenkrolle am Grundkörper. Die beiden Radträger sind beabstandet zueinander ausgebildet und über einen Querträger miteinander gekoppelt. Dabei sind die Radträger vorzugsweise einendseitig sowie anderendseitig am Querträger befestigt. Im Ergebnis ist so eine robuste Konstruktion gegeben, die auch dazu geeignet ist, hohe Lasten aufnehmen zu können. Dementsprechend groß kann das zulässige Transportgewicht ausfallen.

Gemäß einem weiteren Merkmal der Erfindung ist vorgesehen, dass die Radträger jeweils und die Schwenkachse verdrehbar am Chassis angeordnet sind, zu welchem Zweck ein Radträger zwei in Schwenkachsenrichtung voneinander beabstandete Lageraugen aufweist, die einen Lagerzapfen aufnehmen.

Zur verschwenkbaren Anordnung des Grundkörpers am Chassis dienen die Radträger des Grundkörpers. Über den zwischen den beiden Radträgern angeordneten Querträgern sind die beiden Radträger bewegungsgekoppelt, so dass die beiden Radträger im Verschwenkfall synchronisiert sind.

Zwecks verschwenkbarer Anordnung eines Radträgers am Chassis sind am Radträger zwei Lageraugen vorgesehen. Diese sind in Richtung der Schwenkachse beabstandet zueinander angeordnet. Im endmontierten Zustand ist zwischen den beiden Lageraugen eine chassisseitige Zapfenführung angeordnet. Ein von den beiden Lageraugen eines Radträgers aufgenommener Lagerzapfen durchgreift mithin nicht nur die Lageraugen des Radträgers, sondern auch die dazwischen angeordnete Zapfenführung des Chassis. Es ist so eine robuste, gleichwohl aber verschwenkbare Anordnung eines Radträgers am Chassis gewährleistet. Dabei ist von weiterem Vorteil dieser Konstruktion, dass eine einfache Montage bzw. Demontage dadurch ermöglicht ist, dass es lediglich einer Montage bzw. Demontage der Lagerzapfen bedarf, um die zugehörigen Radträger bestimmungsgemäß am Chassis anzuordnen bzw. davon zu lösen.

Gemäß einem weiteren Merkmal der Erfindung ist vorgesehen, dass der Grundträger einen am Querträger angeordneten und sich in Längsrichtung des Chassis erstreckenden Fortsatz aufweist, der zum Querträger beabstandet die Bockrollen trägt.

Zur Anordnung der Bockrollen am Grundkörper dient ein Fortsatz. Dieser Fortsatz ist mit dem Querträger des Grundkörpers verbunden. Dabei erstreckt sich der Fortsatz quer zur Längsausrichtung des Querträgers, womit sich eine insgesamt T-förmige Ausgestaltung ergibt. In schon vorbeschriebener Weise sind am Querträger jeweils endseitig die Radträger angeordnet und der Fortsatz trägt mit seinem dem Querträger gegenüberliegenden Endbereich die Bockrollen. Auf diese Weise ergibt sich eine symmetrische und T-förmige Ausgestaltung hinsichtlich der Laufrollenanordnung.

Gemäß einem weiteren Merkmal der Erfindung ist eine handbetätigbare Verschwenkeinrichtung vorgesehen, die mit der Pendelachse zusammenwirkt. Diese Verschwenkeinrichtung gestattet es, die Pendelachse handbetätigt zu verschwenken. Eine solche handbetätigte Verschwenkung der Pendelachse dient dazu, die von der Pendelachse bereitgestellten Bockrollen aus der Gebrauchsstellung in eine Nichtgebrauchsstellung und umgekehrt zu überführen. Die Verschwenkeinrichtung gestattet es mithin, den Plattformwagen je nach einzunehmender Stellung der Bockrollen für einen Zugbetrieb oder einen Nichtzugbetrieb mit der Möglichkeit einer Querbewegung vorzubereiten.

Gemäß einem weiteren Merkmal der Erfindung ist vorgesehen, dass die Verschwenkeinrichtung einen Achskörper aufweist, der um eine quer zur Längserstreckung des Chassis verlaufende Schwenkachse verdrehbar ist. Dieser Achskörper ist im gewünschten Verschwenkfall der Pendelachse verwenderseitig zu bedienen, das heißt zu verdrehen. Infolgedessen kommt es dann im Weiteren auch zu einer Verdrehbewegung der Pendelachse, so dass in schon vorbeschriebener Weise zwischen einer Gebrauchsstellung und einer Nichtgebrauchsstellung hinsichtlich der von der Pendelachse bereitgestellten Bockrolle unterschieden werden kann.

Gemäß einem weiteren Merkmal der Erfindung ist vorgesehen, dass die Verschwenkeinrichtung einen mit der Pendelachse zusammenwirkenden Hebel aufweist.

Der Hebel der Verschwenkeinrichtung bewirkt im Betriebsfall eine Kraftübertragung von dem verwenderseitig anzutreibenden Achskörper und dem verschwenkbaren Grundkörper der Pendelachse. Dabei erfüllt der Hebel gleichermaßen zwei Funktionen. Zum einen dient er einer Kraftübertragung vom Achskörper auf den Grundkörper der Pendelachse, was dann in vorbeschriebener Weise zu einer Verschwenkbewegung des Grundkörpers führt. Zudem stellt der Hebel aber auch sicher, dass die Pendelachse bei sich in Nichtgebrauchsstellung befindlicher Bockrolle nicht ungewollt zurückverschwenken kann, die in Nichtgebrauchsstellung der Bockrolle also sicher gehalten wird. Der Hebel dient insofern einerseits als Kraftübertragungsmittel sowie andererseits als Sicherungselement. Im Ergebnis ist so eine kompakte, gleichwohl aber eine betriebssichere Verwendung gewährleistende Konstruktion geschaffen.

Gemäß einem weiteren Merkmal der Erfindung dient der Achskörper dem Hebel als Antriebsmittel. Dabei ist der Hebel unter Zwischenordnung einer Gelenkkette an den Achskörper angeschlossen. Im bestimmungsgemäßen Verwendungsfall dient die Gelenkkette als Getriebe zur Kraftübertragung zwischen Achskörper und Hebel. Dabei nimmt die Gelenkkette bei einer in eine Nichtgebrauchsstellung überführten Bockrolle eine Übertotpunktlage ein, womit ein unbeabsichtigtes Zurückverdrehen des Grundkörpers sicher ausgeschlossen ist.

Gemäß einem weiteren Merkmal der Erfindung ist vorgesehen, dass der Achskörper mit einem verwenderseitig bedienbaren Fußpedal zusammenwirkt. Dies ermöglicht in einfacher Weise eine Bedienung des Achskörpers durch einen Verwender, und zwar mittels einfacher Fußbedienung.

Gemäß einem weiteren Merkmal der Erfindung ist vorgesehen, dass der Achskörper mit einer Schubstange zusammenwirkt, die anderendseitig in Wirkverbindung mit einer verschwenkbar am Chassis angeordneten Deichsel steht.

Durch diese konstruktive Maßnahme ist erreicht, dass eine Überführung der Bockrolle aus einer Nichtgebrauchsstellung in eine Gebrauchsstellung nicht nur durch eine verwenderseitige Betätigung des Achskörpers erreicht ist, sondern auch infolge einer Verschwenkung der vom Plattformwagen bereitgestellten Deichsel, und zwar bei einer Verschwenkung der Deichsel zur Überführung derselben in eine Stellung für den Zugbetrieb. Dabei sorgt die mit der Deichsel gekoppelte Schubstange dafür, dass bei einer Überführung der Deichsel in den Zugbetrieb automatisch eine Überführung einer sich in einer Nichtgebrauchsstellung befindlichen Bockrolle in die Gebrauchsstellung stattfindet. Es wird so automatisch die für einen Zugbetrieb gewünschte sichere Geradeausfahrt durch Absenken der Bockrolle sichergestellt. Eine mögliche Fehlbedienung eines Verwenders ist durch diese Kopplung von Achskörper und Deichsel ausgeschlossen. Die Betriebssicherheit wird hierdurch in vorteilhafter Weise erhöht.

Weitere Merkmale und Vorteile der Erfindung ergeben sich aus der nachfolgenden Beschreibung anhand der Figuren. Dabei zeigen
- Fig. 1: in schematisch perspektivischer Ansicht einen erfindungsgemäßen Plattformwagen von oben;
- Fig. 2: in schematisch perspektivischer Ansicht den Plattformwagen nach Fig. 1 von unten;
- Fig. 3: in schematisch perspektivischer Ansicht eine erfindungsgemäße Pendelachse von oben;
- Fig. 4: in schematisch perspektivischer Ansicht die Pendelachse nach Fig. 3 von unten;
- Fig. 5: in schematisch perspektivischer Ansicht von unten eine erfindungsgemäße Pendelachse samt Verstelleinrichtung;
- Fig. 6: in schematisch perspektivischer Ansicht von unten die Verstelleinrichtung nach Fig. 5;
- Fig. 7: in schematischer Seitenansicht einen erfindungsgemäßen Plattformwagen in Zugbetriebsstellung;
- Fig. 8: in schematischer Seitenansicht den Plattformwagen nach Fig. 7 in Querverfahrstellung;
- Fig. 9: in schematischer Seitenansicht den Plattformwagen nach Fig. 7 in einer Rampenfahrtstellung;
- Fig. 10: in schematischer Seitenansicht den Plattformwagen nach Fig. 7 in einer weiteren Rampenfahrtstellung;
- Fig. 11: in schematischer Seitenansicht eine Überführung einer pendelachsseitigen Bockrolle aus ihrer Gebrauchsstellung in eine Nichtgebrauchsstellung;
- Fig. 12: in schematischer Seitenansicht eine Rücküberführung der Bockrolle nach Fig. 11 aus einer Nichtgebrauchsstellung in die Gebrauchsstellung und
- Fig. 13: in schematisch perspektivischer Ansicht von unten einen erfindungsgemäßen Plattformwagen gemäß einer zweiten Ausführungsform.

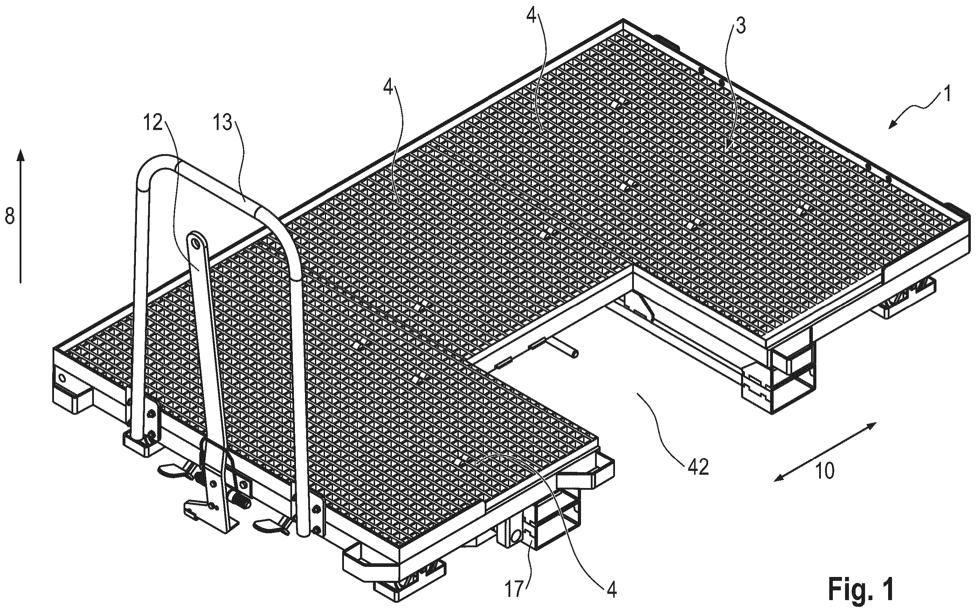

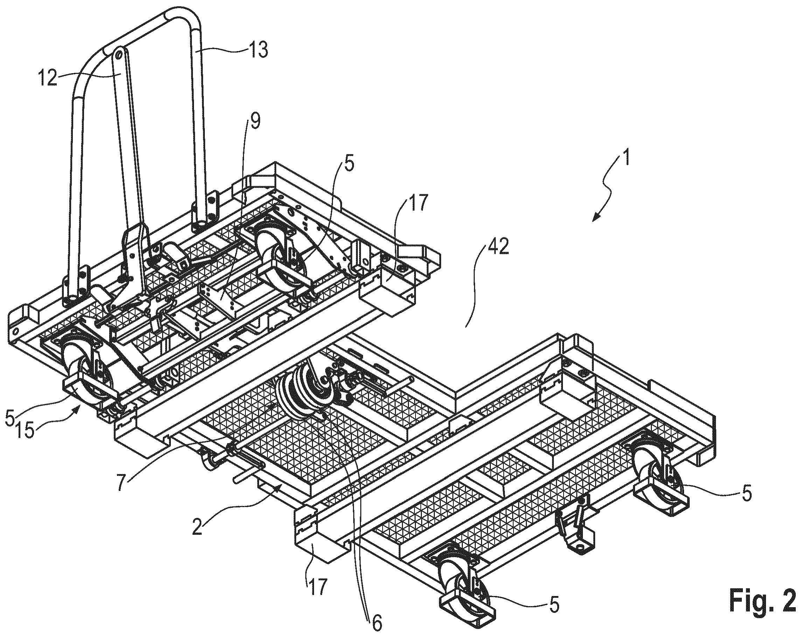

Die Figuren 1 und 2 lassen jeweils in schematischer Perspektivansicht einen erfindungsgemäßen Plattformwagen 1 erkennen, und zwar Fig. 1 in einer Ansicht von oben und Fig. 2 in einer Ansicht von unten.

Wie sich aus einer Zusammenschau der Figuren 1 und 2 ergibt, verfügt der Plattformwagen 1 über ein Chassis 2 und eine Plattform 3, die vom Chassis 2 getragen ist. Im dargestellten Ausführungsbeispiel ist die Plattform 3 aus einzelnen Plattformelementen 4 zusammengesetzt, bei denen es sich um Gitterroste handelt. Im bestimmungsgemäßen Verwendungsfall dient die Plattform 3 der Aufnahme einer vom Plattformwagen 1 zu transportierenden Last, beispielsweise einer Last in der Ausgestaltung eines Stückguts.

Wie die Figuren 1 und 2 ferner erkennen lassen, stellt der Plattformwagen 1 sowohl hinsichtlich des Chassis 2 als auch der Plattform 3 einen Ausschnitt 42 bereit. Dieser Ausschnitt 42 kann einem Verwender dazu dienen, auf der Plattform 3 abgestellte Stückgüter besser erreichen zu können.

Wie sich insbesondere aus der Darstellung nach Fig. 2 ergibt, verfügt der Plattformwagen 1 des Weiteren über ein Fahrwerk 15, das im gezeigten Ausführungsbeispiel eine Mehrzahl von Lenkrollen 5 bereitstellt, die das Chassis 2 tragen. Im gezeigten Ausführungsbeispiel sind insgesamt vier Lenkrollen 5 vorgesehen.

Das Fahrwerk 15 verfügt des Weiteren über zwei Bockrollen 6, die im gezeigten Ausführungsbeispiel zu einer Doppelbockrolle 7 miteinander kombiniert sind. Auch die Bockrollen 6 sind ebenso wie die Lenkrollen 5 am Chassis 2 des Plattformwagens 1 angeordnet.

Das Fahrwerk 15 verfügt insgesamt über sechs Laufrollen, und zwar in vorbeschriebener Weise über vier Lenkrollen 5 einerseits und zwei Bockrollen 6 andererseits.

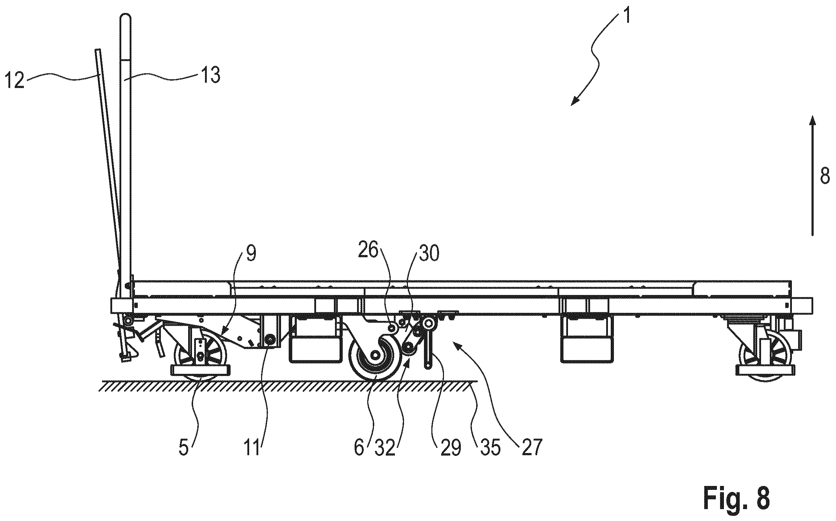

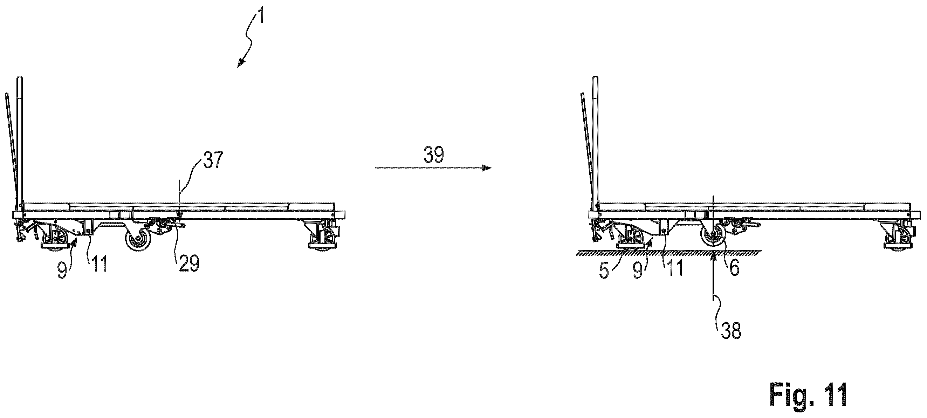

Die Bockrollen 6 sind in Höhenrichtung 8 des Chassis 2 verfahrbar ausgebildet und können aus einer Gebrauchsstellung in eine Nichtgebrauchsstellung und umgekehrt überführt werden. Dabei haben die Bockrollen 6 in Gebrauchsstellung Bodenkontakt. In ihrer Nichtgebrauchsstellung sind die Bockrollen 6 in Höhenrichtung 8 nach oben verfahren, haben also keinen Bodenkontakt mehr, wie dies im Weiteren insbesondere noch anhand der Figuren 8 und 11 erläutert werden wird.

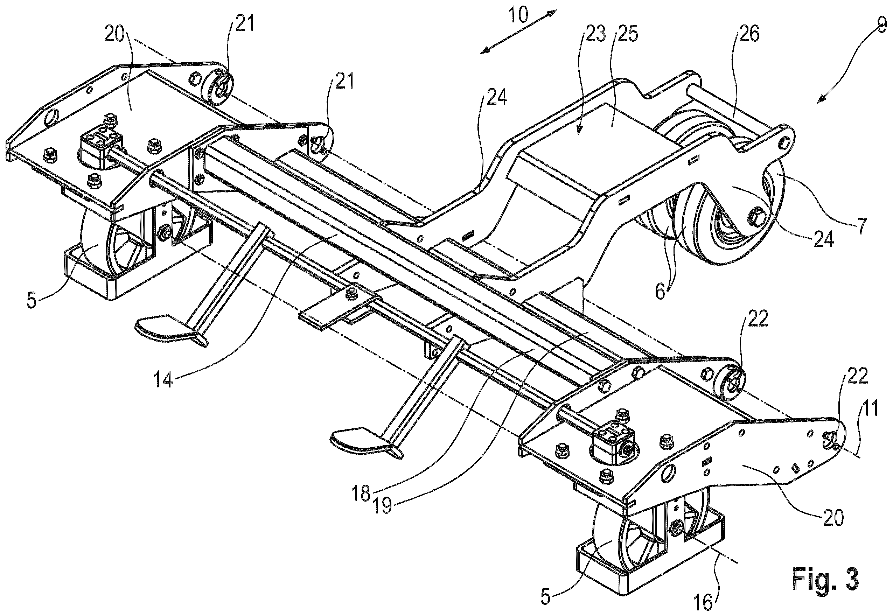

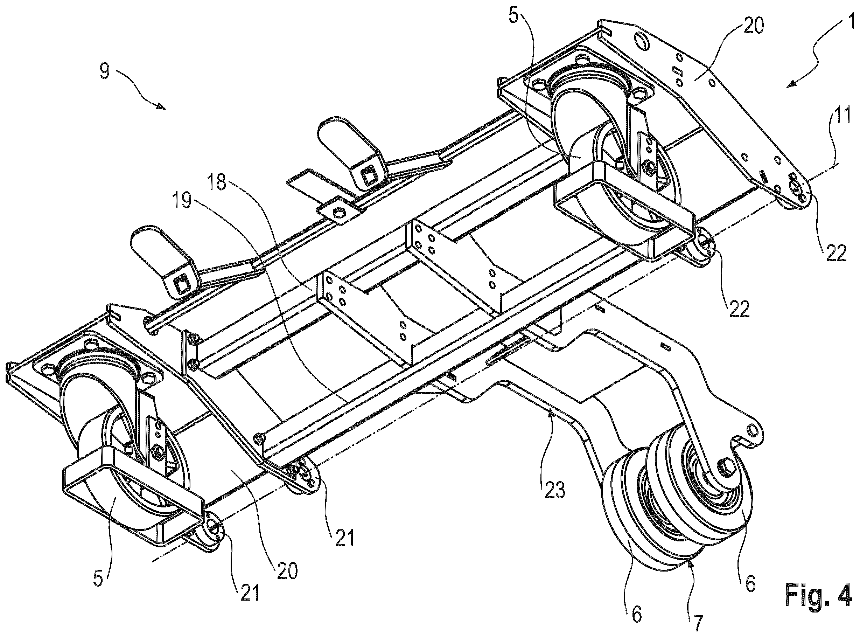

Der erfindungsgemäße Plattformwagen 1 verfügt über eine Pendelachse 9. Diese ist in jeweils schematischer Perspektivansicht in den Figuren 3 und 4 dargestellt.

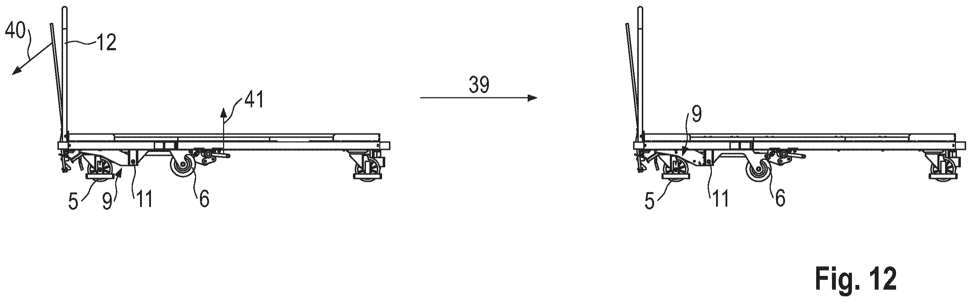

Die Pendelachse 9 trägt die beiden in Vorwärtsfahrtrichtung vorderen Lenkrollen 5 sowie die beiden Bockrollen 6. Dabei sind diese Rollen an einem Grundkörper 14 der Pendelachse 9 angeordnet, der um eine quer zur Längserstreckung 10 des Chassis 2 verlaufende Schwenkachse 11 verdrehbar ist. Im endmontierten Zustand kann der Grundkörper 14 der Pendelachse 9 mithin um die Schwenkachse 11 verdrehen, und zwar samt der vom Grundkörper 14 getragenen Lenkrollen 5 und Bockrollen 6. Dieser Sachzusammenhang ergibt sich insbesondere auch aus einer Zusammenschau der Figuren 11 und 12, die im Weiteren noch erläutert werden.

Im Unterschied zum Stand der Technik sind die in Vorwärtsfahrt vorderen Lenkrollen 5 und die Bockrollen 6 mithin nicht direkt, sondern unter Zwischenordnung der Pendelachse 9 am Chassis 2 des Plattformwagens 1 angeordnet. Dabei sind, wie sich dies insbesondre aus einer Zusammenschau der Figuren 3 und 4 ergibt, die Lenkrollen 5 und die Bockrollen 6 unter Zwischenordnung der Schwenkachse 11 einander gegenüberliegend ausgebildet. Mit Bezug beispielsweise auf die Zeichnungsebene nach Fig. 3 befinden sich die Lenkrollen 5 mithin diesseits der Schwenkachse 11, die Bockrollen 6 hingegen jenseits der Schwenkachse 11.

Wie sich aus einer Zusammenschau der Figuren 3 und 4 ferner ergibt, sind die Lenkrollen 5 auf einer parallel zur Schwenkachse 11 verlaufenden Achse 16 angeordnet, und zwar beabstandet zueinander. In Richtung der Achse 16 fluchten mithin die beiden Lenkrollen 5.

Die Bockrollen 6 sind mit Bezug auf die quer zur Längserstreckung 10 des Chassis 2 verlaufende Schwenkachse 11 mittig zwischen den beiden voneinander beabstandeten Lenkrollen 5 angeordnet. Es ergibt sich so im Ergebnis eine symmetrische, T-förmige Anordnung der Lenkrollen 5 und der Bockrollen 6.

Wie die Figuren 3 und 4 ferner erkennen lassen, weist der Grundkörper 14 einen Querträger 18 auf. Dieser Querträger 18 trägt je Lenkrolle 5 einen Radträger 20, die jeweils endseitig des Querträgers 18 angeordnet sind. Im gezeigten Ausführungsbeispiel ist in Ergänzung zum Querträger 18 ein parallel zum Querträger 18 verlaufender, zweiter Querträger 19 vorgesehen, an dem die Radträger 20 ebenfalls jeweils endseitig angeordnet sind. Dabei dient der zweite Querträger 19 einer zusätzlichen Stabilisierung der Gesamtkonstruktion. Der Grundkörper 14 verfügt des Weiteren über einen sich quer zu den Querträgern 18 und 19 erstreckenden Fortsatz 23, der zum Querträger 18 beabstandet die Bockrollen 6 trägt. Diese Konstruktion bewirkt die schon vorerläuterte T-förmige Anordnung der Lenkrollen 5 und der Bockrollen 6.

Im gezeigten Ausführungsbeispiel gemäß der Figuren 3 und 4 verfügt der Fortsatz 23 über zwei Flachmaterialien 24, die mit den Querträgern 18 und 19 verbunden, vorzugsweise verschweißt sind. Als Abstandshalter zwischen den beiden Flachmaterialien 24 dient eine Platte 25. Diese Platte 25 dient auch einer verstärkten Ausgestaltung des Fortsatzes 23. In dem den Querträgern 18 und 19 gegenüberliegenden Endbereich des Fortsatzes 23 sind die beiden Bockrollen 6 angeordnet. Diese befinden sich im gezeigten Ausführungsbeispiel zwischen den beiden Flachmaterialien 24, die auch die Drehachse bereitstellen, um die herum sich die Bockrollen 6 im bestimmungsgemäßen Verwendungsfall verdrehen können.

Der Fortsatz 23 stellt des Weiteren endseitig eine Stange 26 bereit, die mit einer im Weiteren noch beschriebenen Verstelleinrichtung 27 zusammenwirkt.

Zur verschwenkbaren Anordnung des Grundkörpers 14 am Chassis 2 dienen die Radträger 20. Diese sind jeweils um die Schwenkachse 11 verschwenkbar am Chassis 2 angeordnet, zu welchem Zweck ein Radträger 20 zwei in Schwenkachsenrichtung voneinander beabstandete Lageraugen aufweist, die im endmontierten Zustand einen Lagerzapfen aufnehmen. Der mit Bezug auf die Zeichnungsebene nach Fig. 3 linke Radträger 20 stellt die Lageraugen 21 und mit Bezug auf die Zeichnungsebene nach Fig. 3 rechte Radträger 20 stellt die beiden Lageraugen 22 bereit. Da die beiden Radträger 20 über die beiden Querträger 18 und 19 miteinander gekoppelt sind, findet im bestimmungsgemäßen Verwendungsfall eine synchronisierte Verdrehbewegung der beiden Radträger 20 und damit auch des Grundkörpers 14 statt.

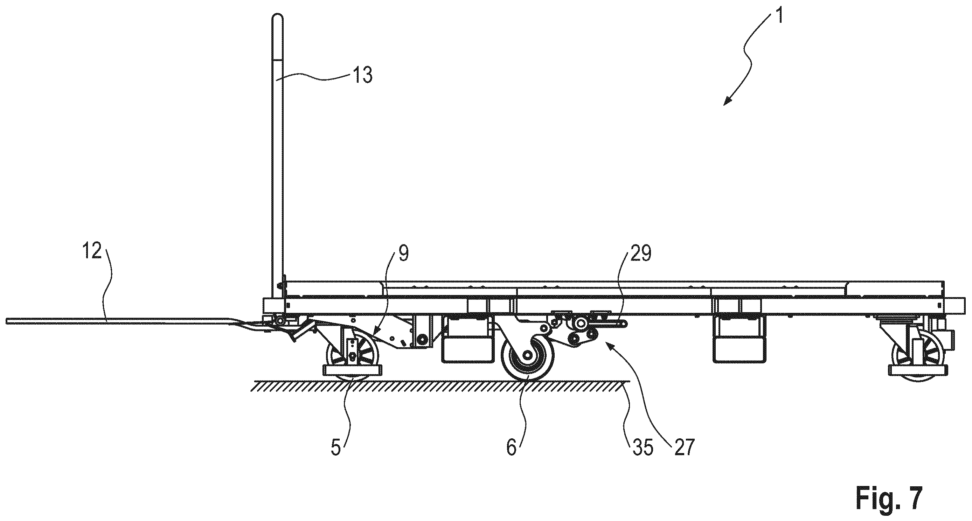

Die erläuterte Anordnung der beiden vorderen Lenkrollen 5 und der Bockrollen 6 an der verschwenkbar ausgebildeten Pendelachse 9 hat den Vorteil, dass sowohl die Lenkrollen 5 als auch die Bockrollen selbst stets Bodenkontakt haben, auch bei einer Rampenfahrt, so dass insbesondere auch im Falle einer Rampenfahrt der Geradeauslauf im Zugbetrieb sichergestellt ist. Dieser Sachzusammenhang ergibt sich insbesondere aus einer Zusammenschau der Figuren 7 einerseits und 9 und 10 andererseits.

Fig. 7 lässt den erfindungsgemäßen Plattformwagen 1 in Zugbetriebsstellung erkennen. Sämtliche Laufrollen des Fahrwerks 15 haben Bodenkontakt, auch die in Vorwärtsrichtung vorderen Lenkrollen 5, und die Bockrollen 6, die von der Pendelachse 9 bereitgestellt sind.

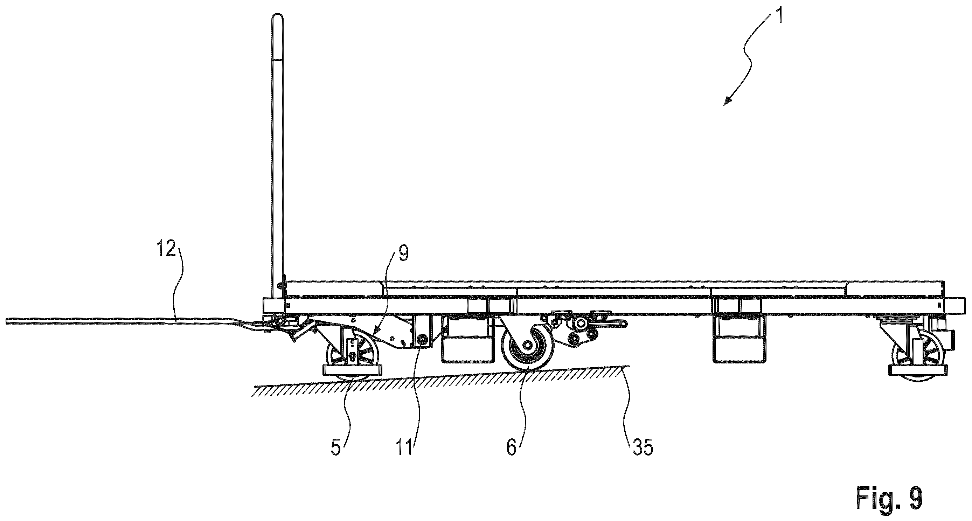

Bei einer Rampenfahrt nach unten, wie sie in Fig. 9 dargestellt ist, bleibt der Bodenkontakt der pendelachsseitigen Laufrollen in vorteilhafter Weise bestehen. Dies ergibt sich dadurch, dass der Grundkörper 14 der Pendelachse 9 mit Bezug auf die Zeichnungsebene nach Fig. 9 nach links, das heißt entgegen des Uhrzeigersinns verdrehen kann, und zwar um die Schwenkachse 11. Diese Verschwenkmöglichkeit des Grundkörpers 14 stellt den Bodenkontakt der Lenkrollen 5 und der Bockrollen 6 sicher.

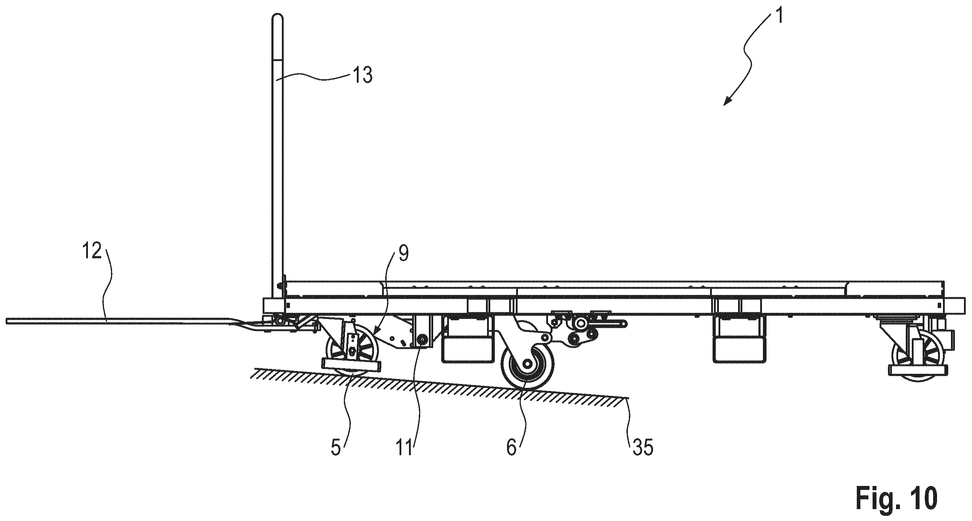

Selbiges gilt bei einer Rampenfahrt nach oben, wie sich dies aus der Darstellung nach Fig. 10 ergibt. In diesem Fall ist der Grundkörper 14 der Pendelachse 9 mit Bezug auf die Zeichnungsebene nach Fig. 10 nach rechts, das heißt im Uhrzeigersinn verdreht. Infolgedessen halten auch in diesem Fall die Lenkrollen 5 und die Bockrollen 6 der Pendelachse 9 stets Bodenkontakt mit dem Untergrund 35.

Der Bodenkontakt der Bockrollen 6 mit dem Untergrund 35 ist bei einem Zugbetrieb des Plattformwagens 1 erwünscht, um so sicherzustellen, dass ein Geradeauslauf gewährleistet ist und es nicht zu ungewollten Schlingerbewegungen des Plattformwagens quer zur Fahrtrichtung kommt. Außerhalb des Zugbetriebs soll eine zur Längsrichtung des Plattformwagens 1 quer ausgerichtete Verfahrbewegung möglich sein, auch eine im 90° Winkel zur Längserstreckung stehende Querbewegung. Dies ist durch die verdrehbaren Lenkrollen 5 ermöglicht. Allerdings blockieren in Gebrauchsstellung befindliche Bockrollen 6 eine solche Querbewegung, weshalb diese vor einer Querbewegung zunächst einmal aus ihrer Gebrauchsstellung in eine Nichtgebrauchsstellung zu überführen sind. Eine solche Überführung der Bockrollen 6 aus der Gebrauchsstellung in eine Nichtgebrauchsstellung und umgekehrt ist mittels der erfindungsgemäßen Pendelachse 9 ermöglicht, und zwar mittels einer verwenderseitigen entsprechenden Bedienung der Pendelachse 9.

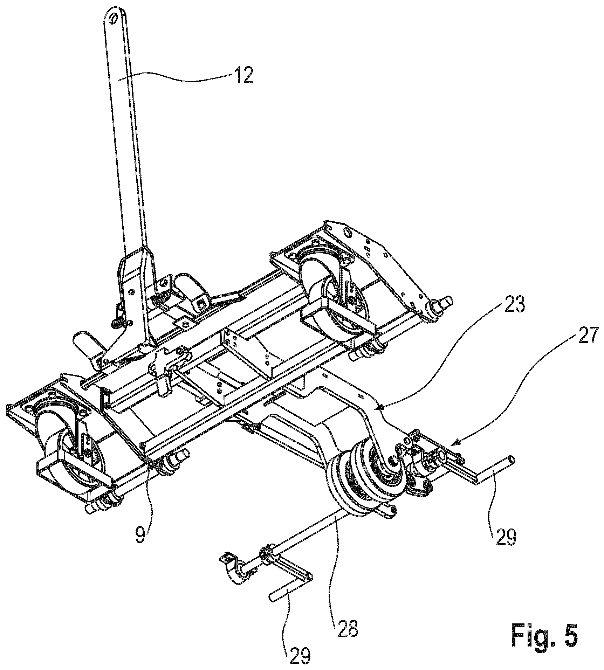

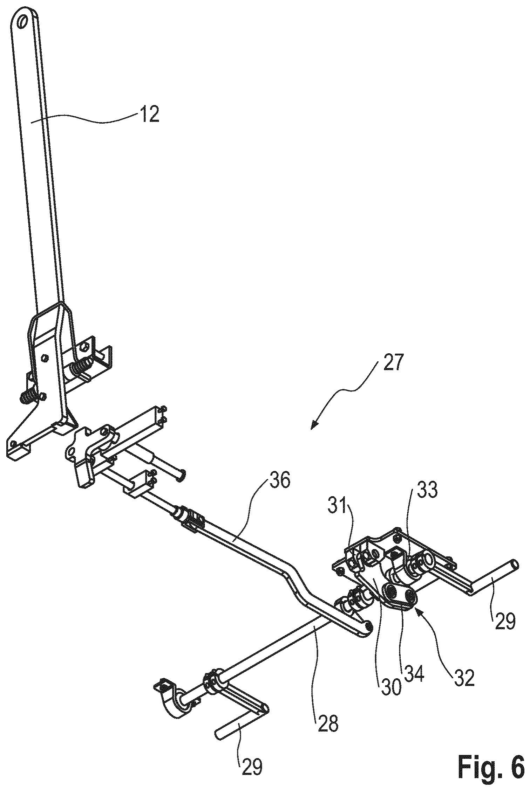

Der Plattformwagen 1 verfügt zu diesem Zweck über eine Verstelleinrichtung 27, wie sich insbesondere aus einer Zusammenschau der Figuren 5 und 6 ergibt.

Die Verstelleinrichtung 27 verfügt über einen Achskörper 28, der um eine Schwenkachse verdrehbar ist, die zur Schwenkachse 11 des Grundkörpers 14 parallel verläuft. Für die verwenderseitige Einleitung einer Verschwenkbewegung des Achskörpers 28 dienen im gezeigten Ausführungsbeispiel Fußpedale 29, die mit dem Achskörper 28 in Wirkverbindung stehen. Bei einer verwenderseitigen Betätigung eines der beiden Fußpedale 29 wird der Achskörper 28 in eine entsprechende Verdrehbewegung überführt.

Der Achskörper 28 dient einem Hebel 30 als Antriebsmittel. Dabei steht der Hebel 30 mit dem Achskörper 28 unter Zwischenordnung einer als Getriebe dienenden Gelenkkette 32 in Wirkverbindung, wie dies insbesondere die Darstellung nach Fig. 6 erkennen lässt.

Der Hebel 30 ist selbst verschwenkbar ausgebildet, so dass unter Zwischenordnung der Gelenkkette 32 eine Verdrehbewegung des Achskörpers 28 zu einer entsprechenden Verdrehbewegung auch des Hebels 30 führt.

Der Hebel 30 hat pendelachsseitig eine Ausklinkung 31. Diese Ausklinkung 31 wirkt mit der schon vorbeschriebenen Stange 26 zusammen, die vom Fortsatz 23 der Pendelachse 9 bereitgestellt ist.

Die Funktionsweise der Verstelleinrichtung 27 ergibt sich insbesondere aus einer Zusammenschau der Figuren 8 und 11.

Wie sich zunächst einmal aus der Darstellung nach Fig. 11 ergibt, kann bei einem sich in Grundstellung befindlichen Plattformwagen eine verwenderseitige Betätigung der Verstelleinrichtung 27 in Entsprechung des Pfeils 37 stattfinden. Dabei findet eine verwenderseitige Fußbetätigung des dafür vorgesehenen Fußpedals 29 statt.

In Entsprechung des Pfeils 39 wird der Plattformwagen 1 in die nach Fig. 11 rechte Position überführt, in welcher die Bockrollen 6 in Entsprechung des Pfeils 38 in Höhenrichtung 8 angehoben sind. In dieser Stellung der Bockrollen 6 besteht kein Kontakt der Bockrollen 6 zum Untergrund 35, die Bockrollen 6 befinden sich mithin in einer Nichtgebrauchsstellung.

Diese Nichtgebrauchsstellung der Bockrollen 6 ist auch in Fig. 8 dargestellt. Dabei kann Fig. 8 in Kombination mit der Darstellung nach Fig. 6 entnommen werden, dass die Gelenkkette 32 über zwei Gelenkhebel 33 und 34 verfügt, die verschwenkbar miteinander gekoppelt sind. Es ist so in Nichtgebrauchsstellung der Bockrollen 6 eine Übertotlage der Gelenkkette 32 erreicht, womit ein unbeabsichtigtes Zurückverschwenken der Bockrollen 6 in die Gebrauchsstellung sicher unterbunden ist.

Es bedarf vielmehr einer verwenderseitigen Bedienung, d. h. Rücküberführung der Bockrollen 6 aus der Nichtgebrauchsstellung nach Fig. 8 in die Gebrauchsstellung nach Fig. 7.

Die Überführung der Bockrollen 6 aus einer Nichtgebrauchsstellung in die Gebrauchsstellung zeigt in einer schematischen Seitenansicht Fig. 12.

Bei einer verwenderseitigen Betätigung des Fußpedals 29 in Entsprechung des Pfeils 21 erfolgt in schon vorbeschriebener Weise eine Zurückverschwenkung des Grundkörpers 14 der Pendelachse 9 mit der Folge, dass die Bockrollen 6 in Höhenrichtung 8 abgesenkt werden und alsdann wieder ihre Gebrauchsstellung einnehmen, wie in Fig. 12 dargestellt.

Alternativ zu einer Betätigung des Fußpedals 29 ist eine Betätigung der Deichsel 12. Sofern diese in Entsprechung des Pfeils 40 mit Bezug auf die Zeichnungsebene nach Fig. 12 nach links verdreht wird, erfolgt gleichsam ein Absenken der Bockrollen 6 in Höhenrichtung 8 nach unten. Dies ist dadurch erreicht, dass die Deichsel 12 über eine Schubstange 36 mit dem Achskörper 28 gekoppelt ist, wie sich dies insbesondere aus der Darstellung nach Fig. 6 ergibt.

Das Absenken der Bockrollen 6 infolge einer Betätigung der Deichsel 12 hat insbesondere den Vorteil, dass bei einer Überführung des Plattformwagens 1 in eine Zugbetriebsstellung, wie sie beispielsweise in Fig. 7 gezeigt ist, ein automatisches Absenken der Bockrollen 6 zur Sicherstellung einer Geradeausfahrt stattfindet. Eine verwenderseitige Fehlbedienung ist damit ausgeschlossen.

Um eine verwenderseitige Querbewegung des Plattformwagens 1 in einfacher Weise zu ermöglichen, verfügt der Plattformwagen 1 des Weiteren über eine entsprechende Handhabe 13, wie dies die Figuren 1 und 2 bzw. 8 erkennen lassen.

Für eine Positionsbewegung des Plattformwagens 1 mithilfe beispielsweise eines Gabelstaplers, verfügt der Plattformwagen 1 des Weiteren über Staplerführungen 17, wie sich diese beispielsweise aus der Darstellung nach Fig. 2 ergeben. Dabei sind im gezeigten Ausführungsbeispiel nach Fig. 2 die Staplerführungen 17 auf der der Plattform 3 abgewandten Unterseite des Chassis 2 angeordnet.

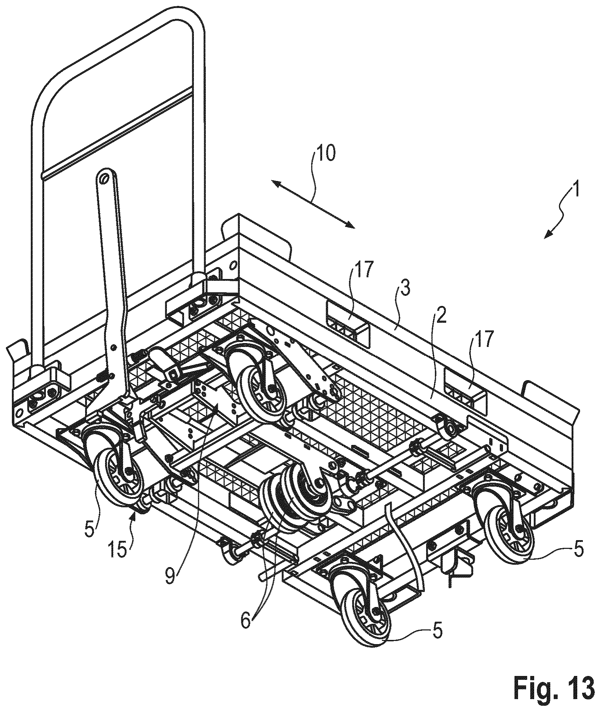

Fig. 13 zeigt diesbezüglich eine zweite, d. h. alternative Ausführungsform des Plattformwagens 1.

Der Plattformwagen 1 nach Fig. 13 ist im Unterschied zur Ausgestaltung beispielsweise nach Fig. 2 in Längserstreckung 10 kürzer ausgeführt. Für die Staplerführungen 17 ist deshalb kein hinreichender Bauraum mehr unterhalb des Chassis 2 vorhanden. Aus diesem Grunde ist gemäß der Ausführungsform nach Fig. 13 vorgesehen, dass entsprechende Staplerführungen 17 in Höhenrichtung 8 zwischen Chassis 2 und Plattform 3 ausgebildet sind.

### Bezugszeichen

- 1: Plattformwagen
- 2: Chassis
- 3: Plattform
- 4: Plattformelement
- 5: Lenkrolle
- 6: Bockrolle
- 7: Doppelbockrolle
- 8: Höhenrichtung
- 9: Pendelachse
- 10: Längserstreckung
- 11: Schwenkachse
- 12: Deichsel
- 13: Handhabe
- 14: Grundkörper
- 15: Fahrwerk
- 16: Achse
- 17: Staplerführung
- 18: Querträger
- 19: Querträger
- 20: Radträger
- 21: Lagerauge
- 22: Lagerauge
- 23: Fortsatz
- 24: Flachmaterial
- 25: Platte
- 26: Stange
- 27: Verstelleinrichtung
- 28: Achskörper
- 29: Fußpedal
- 30: Hebel
- 31: Ausklingung
- 32: Gelenkkette
- 33: Gelenkhebel
- 34: Gelenkhebel
- 35: Untergrund
- 36: Schubstange
- 37: Pfeil
- 38: Pfeil
- 39: Pfeil
- 40: Pfeil
- 41: Pfeil
- 42: Ausschnitt

## Patentansprüche

1. Plattformwagen für den Transport von Stückgut, insbesondere als Anhänger für einen Zugbetrieb ausgebildeter Plattformwagen, mit einem Chassis (2), einer am Chassis (2) angeordneten Plattform (3) und einer Mehrzahl von am Chassis (2) angeordneten Lenkrollen (5), die das Chassis (2) tragen, sowie mit einer am Chassis (2) angeordneten Bockrolle (6), die in Höhenrichtung des Chassis (2) verfahrbar und aus einer Gebrauchsstellung in eine Nichtgebrauchsstellung und umgekehrt überführbar ausgebildet ist, **gekennzeichnet durch** eine Pendelachse (9), die einen um eine quer zur Längserstreckung (10) des Chassis (2) verlaufende Schwenkachse (11) verdrehbar ausgebildeten Grundkörper (14) aufweist, wobei am Grundkörper (14) die Bockrolle (6) und eine Lenkrolle (5) angeordnet sind und wobei die Lenkrolle (5) und die Bockrolle (6) unter Zwischenordnung der Schwenkachse (11) einander gegenüberliegen.

2. Plattformwagen nach Anspruch 1, **dadurch gekennzeichnet, dass** am Grundkörper (14) zwei Lenkrollen (5) angeordnet sind, die auf einer parallel zur Schwenkachse (11) verlaufenden Achse (16) beabstandet zueinander angeordnet sind.

3. Plattformwagen nach Anspruch 1 oder 2, **dadurch gekennzeichnet, dass** am Grundkörper (14) zwei Bockrollen (6) angeordnet sind, vorzugsweise in der Ausgestaltung einer Doppelbockrolle (7).

4. Plattformwagen nach Anspruch 3, **dadurch gekennzeichnet, dass** die Bockrollen (6) mit Bezug auf die quer zur Längserstreckung (10) des Chassis (2) verlaufende Schwenkachse (11) mittig zwischen den beiden voneinander beabstandeten Lenkrollen (5) angeordnet sind.

5. Plattformwagen nach einem der vorhergehenden Ansprüche, **dadurch gekennzeichnet, dass** am Chassis (2) Staplerführungen (17) angeordnet sind.

6. Plattformwagen nach einem der vorhergehenden Ansprüche, **dadurch gekennzeichnet, dass** der Grundkörper (14) einen Querträger (18) und zwei daran jeweils endseitig angeordnete Radträger (20) aufweist.

7. Plattformwagen nach Anspruch 6, **dadurch gekennzeichnet, dass** die Radträger (20) jeweils um die Schwenkachse (11) verdrehbar am Chassis (2) angeordnet sind, zu welchem Zweck ein Radträger (20) zwei in Schwenkachsenrichtung voneinander beabstandete Lageraugen (21, 22) aufweist, die einen Lagerzapfen aufnehmen.

8. Plattformwagen nach Anspruch 6 oder 7, **dadurch gekennzeichnet, dass** der Grundkörper (14) einen am Querträger (18) angeordneten und sich in Längserstreckung (10) des Chassis (2) erstreckenden Fortsatz (23) aufweist, der zum Querträger (18) beabstandet die Bockrollen (6) trägt.

9. Plattformwagen nach einem der vorhergehenden Ansprüche, **gekennzeichnet durch** eine handbetätigbare Verschwenkeinrichtung (27), die mit der Pendelachse (9) zusammenwirkt.

10. Plattformwagen nach Anspruch 9, **dadurch gekennzeichnet, dass** die Verschwenkeinrichtung (27) einen um eine quer zur Längserstreckung (10) des Chassis (2) verlaufende Schwenkachse verdrehbaren Achskörper (28) aufweist.

11. Plattformwagen nach Anspruch 9 oder 10, **dadurch gekennzeichnet, dass** die Verschwenkeinrichtung (27) einen mit der Pendelachse (9) zusammenwirkenden Hebel (30) aufweist.

12. Plattformwagen nach Anspruch 11, **dadurch gekennzeichnet, dass** der Achskörper (28) dem Hebel (30) als Antriebsmittel dient.

13. Plattformwagen nach Anspruch 11 oder 12, **dadurch gekennzeichnet, dass** der Hebel (30) unter Zwischenordnung einer Gelenkkette (32) an dem Achskörper (28) angeordnet ist.

14. Plattformwagen nach einem der vorhergehenden Ansprüche 10 bis 13, **dadurch gekennzeichnet, dass** der Achskörper (28) mit einem verwenderseitig bedienbaren Fußpedal (29) zusammenwirkt.

15. Plattformwagen nach einem der vorhergehenden Ansprüche 10 bis 14, **dadurch gekennzeichnet, dass** der Achskörper (28) mit einer Schubstange (36) zusammenwirkt, die anderendseitig in Wirkverbindung mit einer verschwenkbar am Chassis (2) angeordneten Deichsel (12) steht.
